(19) Europäisches Patentamt

European Patent Office

Office européen des brevets

(11) **EP 1 717 706 A1**

(12) **EUROPEAN PATENT APPLICATION**

(43) Date of publication:
**02.11.2006 Bulletin 2006/44**

(51) Int Cl.:
***G06F 12/02*** *(2006.01)*

(21) Application number: **05290960.3**

(22) Date of filing: **29.04.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (72) Inventor: **Janssens, Nico Alfred Anna**<br>**9290 Overmere (BE)** |
| (71) Applicant: **ALCATEL**<br>**75008 Paris (FR)** | (74) Representative: **Narmon, Gisèle Marie Thérèse et al**<br>**Alcatel Bell N.V.**<br>**Intellectual Property Department**<br>**Copernicuslaan 50**<br>**2018 Antwerpen (BE)** |

(54) **Method to reduce the latency caused by garbage collection in a java virtual machine**

(57)    A method to reduce the latency caused by garbage collection in a Java Virtual Machine (JVM) wherein different machines (MC1, MC2, MC3) are running consecutive tasks (P1, P2, P3) of an application. Because instances of a garbage collector (GC1, GC2, GC3) have to run on each machine and interrupt the task running then on that machine, their starts are synchronized to optimize the impact on the latency of the application's response. In other words, because the tasks of the application run successively on different machines, the garbage collector (GC) affects the operation of only one machine by starting all its instances simultaneously on all the machines, i.e. by synchronizing the instances of the GC tasks. Each machine may be of the multi-processor type (CPU1, CPU2, CPU3) whereby the operation of all the processors is interrupted when an instance of the garbage collector is running on one of these processors.

**Fig. 3**

**Description**

The present invention relates to a method to run tasks of an application on different machines within a Java Virtual Machine environment, while running instances of a garbage collector at predetermined time periods on each of said machines, and wherein each instance of said garbage collector interrupts the task running on the same machine.

In such a Java Virtual Machine JVM, or the like as for instance J2EE, including a Garbage Collector GC for application servers, the tasks of the application suffer from impact of the instances of the garbage collector on latency of their responses.

The generally known method of running tasks of an application on different machines consists out of the current implementations of the garbage collector. Typically, an instance of the garbage collector runs within a machine, unaware of the garbage collector states on the other machines.

A problem with the known method is that the whole machine is interrupted any time an instance of the GC comes into action. The main impact is in the case where multiple machines are grouped, e.g. to have a better performance/ capacity. This grouping can either be in a cluster, where all the machines perform the same application or service, either in a cascaded way, where each machine needs the results of another machine to start performing its task. For most applications the overall latency needs to be relatively low. Typically the GC impact is considered on a per machine basis. Therefore the impact of the GC should be minimal.

An object of the present invention is to provide a method to reduce the latency caused by garbage collection in a java virtual machine, as of the above known type, but wherein the maximum possible latency that can be encountered/ experienced by an application is minimized.

According to the invention, this object is achieved due to the fact that said method comprises the step of starting all the instances of said garbage collector simultaneously on all the machines.

By synchronizing the instances of the GC tasks in such a way on the different machines, the maximum latency will be minimal, bringing as much as possible of the service requests within the specified limit. This feature drastically expands the range of products that could be labeled "carrier grade".

In a preferred characterizing embodiment of the present invention, said application comprises a plurality of consecutive tasks distributed over the different machines, wherein a first task completed on a first machine is followed by a second task running on a second machine.

In such an embodiment, the advantage of the present invention is dramatically increased. Indeed, in the prior art, when the machines operate in cascade, the instances of the GC may run on each machine unfortunately while it is performing a task of the application. The latencies are then cumulated to increase dramatically the delay for completing the application. With the present invention however, as the instances of the GC are synchronized, when one instance of the GC runs on a particular machine, e.g. the one running then a task of the application, no other instance of the GC can disturb any other task of this application, since the tasks are running in cascade. The total latency is then influenced by at maximum one instance of the GC.

Another characterizing embodiment of the present invention is that each machine comprises a plurality of processors, and that the operation of all the processors of a same machine are simultaneously interrupted by the instance of said garbage collector running on one of the processors of said machine.

In such a case where the JVM runs on a multi-processor machine, one processor of a particular machine is generally allocated to perform the GC task in one shot. By doing so, it will lock the memory. Basically also the other processors will postpone their processing as long as the GC task is running on that one processor. Owing to the present invention, not only the latency on the machines is reduced by synchronizing the instances of the GC, but also the latency on the processors within these machines.

Also another characterizing embodiment of the present invention is that an instance of said garbage collector comprises at least a portion that interrupts the task running on the same machine, and that said method comprises the step of starting all the interrupting portions of the instances of said garbage collector simultaneously on all said machines.

In this preferred embodiment, the interrupting portion(s) of the garbage collector are synchronized on the different machines and/or the processors thereof rather than the whole instances of the GC tasks. In this way, one machine or one processor of a machine will perform the non-interrupting portion(s) of an instance of the garbage collector by scanning the memory. Basically, the other machines or processors can still be running during this subtask. Only when the interrupting portion(s) of the GC are running on a machine or a processor, all processing on the other machines will be stopped. The result is that the application is then available for a longer period of time.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:

Fig. 1 represents the best case with non-synchronized instances of a garbage collector GC running on different machines as known from the prior art,

Fig. 2 represents the worst case with non-synchronized instances of a GC running on different machines as known from the prior art,

Fig. 3 represents synchronized instances of a GC running on different machines, according to the invention,

Fig. 4 represents the impact of a GC running on different processors of a machine, and

Fig. 5 represents the impact of a GC running on different processors of a machine when only a portion of the GC interrupts a task running of the machine.

The present invention relates to a Java Virtual Machine JVM, or the like as for instance J2EE, wherein different machines are running tasks of an application. The Java Virtual Machine includes a Garbage Collector GC for application servers of which instances are running at predetermined time periods on each machines. Each instance of the garbage collector running on a particular machine interrupts the task running at that time on the same machine. As a result, the tasks of the application suffer from impact of the instances of the garbage collector on latency of their responses.

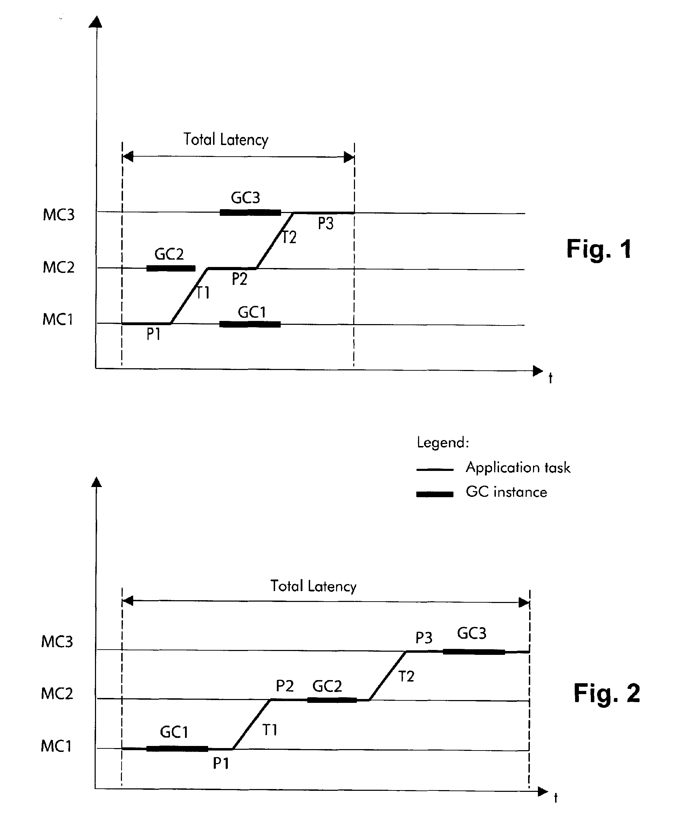

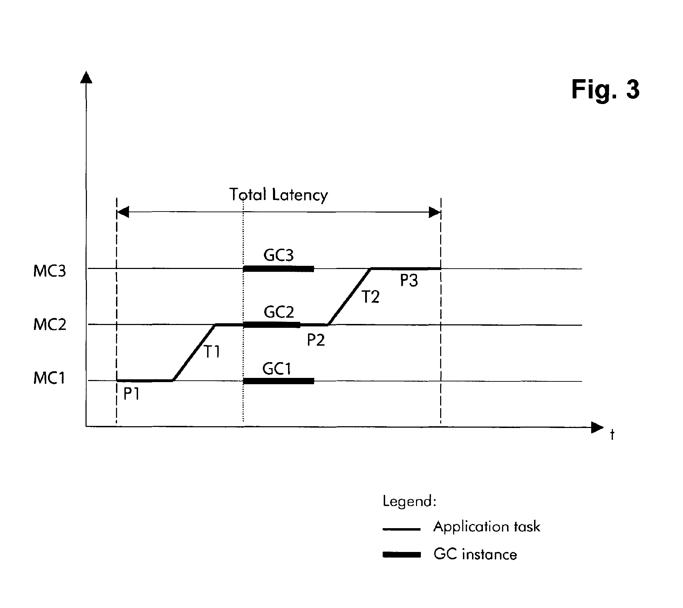

The Figs. 1 and 2 respectively show the best and worst cases of an application running on different machines MC1, MC2, MC3 (represented by small horizontal lines) that each can implement any of the garbage collector mechanisms. The somewhat thicker line (jumping through the different machines) represents the flow of a single request or application. The dashed vertical lines represent the reception of a request and the sending of a response, for a single request/response application. The total latency of this application is the time between these two vertical lines.

As shown on the Figs. 1 and 2, the application comprises several consecutive tasks P1, P2, P3 distributed over the different machines MC1, MC2, MC3, wherein a first task P1 completed on a first machine MC1 is followed by a second task P2 running on a second machine MC2 that itself is followed by a third task P3 running on a third machine MC3. The transition between the task P1 and the task P2 is indicated by the line T1, whilst the transition between the tasks P2 and P3 is indicated by the line T2.

The garbage collection, represented by the different instances of the garbage collector GC, is represented by bold horizontal lines. The instance of the garbage collector running on the machine MC1 is labeled GC1, the instance of GC running on MC2 is labeled GC2 and the instance of GC running on MC3 is labeled GC3.

In the known method, shown at the Figs. 1 and 2, the instances GC1, GC2 and GC2 of the garbage collector are not synchronized. This means that an instance of the GC may start at any time during the application. It is to be noted that in real life multiple requests or applications are being send concurrently and that the instances of the garbage collector could be seen as being started at random times. Over a longer time period, some of the applications will experience a minimum latency, whilst some other will experience a maximum latency.

On the one hand and as already mentioned, Fig. 1 represents the best case with non-synchronized instances of the garbage collector. In this case, there is no overlapping between the GC and the tasks P1, P2, P3 of the application. In other words, the single application/service request doesn't encounter any GC impact. As a result, the total latency is equal to

$$P1 + T1 + P2 + T2 + P3$$

Wherein:

- T1, T2: represent the transmission time needed to transport the request or task to the next server or machine, and
- P1, P2 and P3: represent the time it takes to do the processing (task) respectively in the machine MC1, the machine MC2 and the machine MC3. In this example, the overall response is generated after being processed in the 3 machines, each performing a particular task.

On the other hand, Fig. 2 represents the worst case with non-synchronized instances of the garbage collector. In this case, every instance of the GC runs on a machine while a task is also running of that machine. The request or application then suffers in each machine from the GC impact. As a consequence, the total latency is equal to

$$P1 + T1 + P2 + T2 + P3 + 3*Tgc$$

Wherein Tgc is the time wherein a single machine MC1, MC2 or MC3 is not available for performing its application tasks P1, P2, P3 because the latter is interrupted by GC1, GC2 or GC3 respectively.

As such, the latency, i.e. the sum of the latencies on each machine, could grow beyond allowed boundaries of the application, as a result of which the total latency becomes longer than the time allowed to run the application.

The idea of the present invention is to synchronize the starting time of the instances GC1, GC2 and GC3 of the garbage collector GC in the different machines MC1, MC2 and MC3, in such a way that all machines perform the GC at the very same moment. In this case, only one task of an application will experience the overall GC cycle.

The solution with synchronized instances of the GC is shown at Fig. 3. Therein, the application/service request only encounters a maximum of one GC impact. As a result, the total latency is equal to

$$P1 + T1 + P2 + T2 + P3 + \underline{1}*Tgc$$

In typical cases, the Tgc accounts for approx 50-100ms. The GC is more or less periodically triggered (typically in the order of seconds), under steady load conditions. Within the telecommunications area, typical maximum response times are in the order of 100ms. As such approximately 10% (100ms/lsec) of the request/application could suffer from the GC impact. Bringing also these last percentages of requests within common specifications can result in being able to stamp the product as a "carrier grade" (difference between 3 9's and 5 9's).

In order to synchronize the different instances of the GC, they must be informed on the status of the other ones. The synchronization signal can be in different forms:

- a kind of dedicated wire carrying a start pulse,
- a specific (software) protocol between the JVMs (carried over an IP transport mechanism) indicating the instantaneous start of the GC, or
- a (software) protocol indicating an upfront scheduled GC start-time. This however requires a common time base.

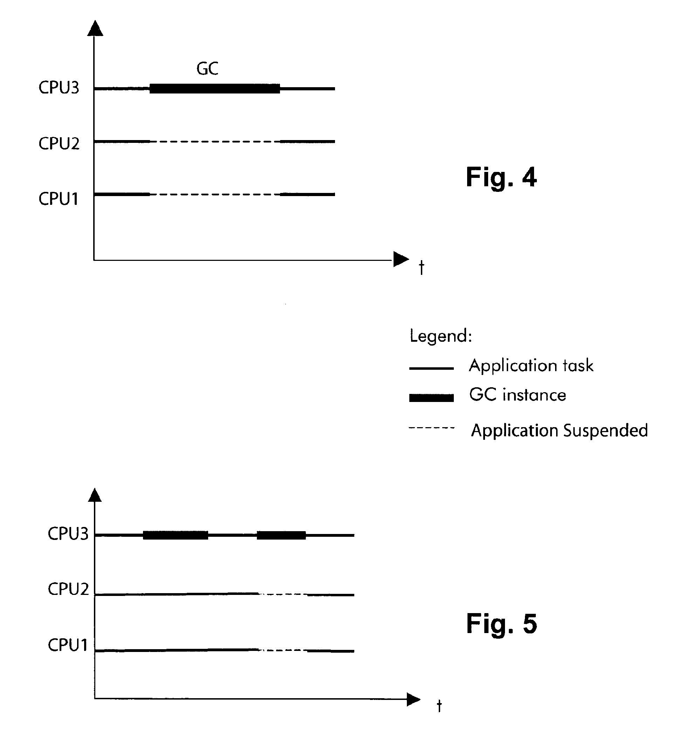

It is to be noted that each machine MC1, MC2 or MC3 may comprise a plurality of processors CPU1, CPU2, CPU3 as represented at Fig. 4 for one machine. The operation of all the processors CPU1, CPU2, CPU3 of a same machine are simultaneously interrupted by the instance of the garbage collector GC running on one of the processors of this machine. In this multi-processor machine, one processor, say CPU3, is generally allocated to perform an instance of the GC in one shot. However, this instance of GC locks the memory of the whole machine, as indicated by the dashed horizontal line at Fig. 4. As a result, the other processors CPU1 and CPU2 have to postpone their processing as long as the instance of the GC is running on that one processor CPU3.

The above-mentioned Tgc time is thus the time where the all the processors CPU1, CPU2, CPU3 of a single machine are not available for performing an application task. In a normal case the Tgc may be different per machine.

The task of the application running on the machine whereof a processor runs an instance of the GC suffers from impact of this instance on latency of its response. However, by synchronizing the instances of the GC, the other machines are not affected by this garbage collection and the tasks thereof don't suffer from latency.

It is also to be noted that only a portion of an instance of the garbage collector GC may interrupt the task running on a machine. In this case, it is sufficient to synchronize only the starts of all the interrupting portions of the instances of the garbage collector GC, so that these interrupting portions run simultaneously on all the machines and, as a consequence on all the processors thereof. This case is for instance shown at Fig. 5 where the time during which the processors CPU1 and CPU2 are interrupted, i.e. when the application is suspended, is indicated by a dashed horizontal line. Because only a portion of the GC affects the total latency, the Tgc time is dramatically reduced and the application may run much faster.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

**Claims**

1.  A method to run tasks (P1, P2, P3) of an application on different machines (MC1, MC2, MC3) within a Java Virtual Machine (JVM) environment, while running instances of a garbage collector (GC1, GC2, GC3) at predetermined time periods on each of said machines, and wherein each instance of said garbage collector interrupts the task running on the same machine,
    *characterized in that* said method comprises the step of starting all the instances of said garbage collector (GC1, GC2, GC3) simultaneously on all the machines (MC1, MC2, MC3).

2.  The method according to claim 1, *characterized in that* said application comprises a plurality of consecutive tasks (P1, P2, P3) distributed over the different machines (MC1, MC2, MC3), wherein a first task (P1) completed on a first machine (MC1) is followed (T1) by a second task (P2) running on a second machine (MC2).

3.  The method according to claim 1,
    *characterized in that* each machine (MC1, MC2, MC3) comprises a plurality of processors (CPU1, CPU2, CPU3),
    *and in that* the operation of all the processors of a same machine are simultaneously interrupted by the instance of said garbage collector (GC1, GC2, GC3) running on one of the processors of said machine.

4.  The method according to claim 1,
    *characterized in that* an instance of said garbage collector (GC1, GC2, GC3) comprises at least a portion that interrupts the task running on the same machine,
    *and in that* said method comprises the step of starting all the interrupting portions of the instances of said garbage collector simultaneously on all said machines (MC1, MC2, MC3).

Fig. 1

Legend:
―――― Application task
▬▬▬ GC instance

Fig. 2

Fig. 3

**Fig. 4**

Legend:

—— Application task

▬▬ GC instance

----- Application Suspended

**Fig. 5**

**European Patent Office**

**EUROPEAN SEARCH REPORT**

Application Number

EP 05 29 0960

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | R. VELDEMA, R.A.F. BHOEDJANG, H.E. BAL: "Jackal, A Compiler Based Implementation of Java for Clusters of Workstations"[Online] 2001, XP002343892 Retrieved from the Internet: URL:http://citeseer.ist.psu.edu/308851.html> [retrieved on 2005-09-07] * page 5, right-hand column * | 1-4 | G06F12/02 |
| A | R. VELDEMA, R.A.F. BHOEDJANG, H.E. BAL: "Distributed Shared Memory Management for Java"[Online] 1999, XP002343893 Retrieved from the Internet: URL:http://citeseer.ist.psu.edu/veldema99d istributed.html> [retrieved on 2005-09-07] * the whole document * | 1-4 | |
| A | MONNET S ET AL: "Hybrid checkpointing for parallel applications in cluster federations" 2004 IEEE INTERNATIONAL SYMPOSIUM ON CLUSTER COMPUTING AND THE GRID (IEEE CAT. NO.04EX836) IEEE PISCATAWAY, NJ, USA, 2004, pages 773-782, XP002343894 ISBN: 0-7803-8430-X * page 4, left-hand column * | 1-4 | TECHNICAL FIELDS SEARCHED (Int.Cl.7) G06F |
| A | ABDULLAHI S E ET AL: "Garbage collecting the Internet: a survey of distributed garbage collection" ACM COMPUTING SURVEYS ACM USA, vol. 30, no. 3, September 1998 (1998-09), pages 330-373, XP002343895 ISSN: 0360-0300 * the whole document * | 1-4 | |

The present search report has been drawn up for all claims

| Place of search | Date of completion of the search | Examiner |
|---|---|---|
| The Hague | 8 September 2005 | Dewyn, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)